# NEUE EUROPÄISCHE PATENTSCHRIFT

(11) **EP 1 850 018 B2**
(45) Veröffentlichungstag und Bekanntmachung des Hinweises auf die Entscheidung über den Einspruch: **13.06.2012**
(45) Hinweis auf die Patenterteilung: 01.07.2009
(21) Anmeldenummer: 07007948.8
(22) Anmeldetag: 19.04.2007
(51) Int. Cl.: F16C 33/12, B32B 15/01, C23C 28/02, C23C 30/00

(54) **Bandförmiger Werkstoffverbund**
Strip-shaped composite material
Matériau composite en bande

(30) Priorität: 28.04.2006 DE 102006019826
(43) Veröffentlichungstag der Anmeldung: 31.10.2007
(73) Patentinhaber: Wieland-Werke AG, 89070 Ulm (DE)
(72) Erfinder: Ababneh, Maher, Dr., 89077 Ulm (DE); Kuhn, Hans-Achim, Dr., 89257 Illertissen (DE); Voggeser, Volker, 89269 Vöhringen (DE)

(56) Entgegenhaltungen:
- EP-A2- 0 681 114
- DE-A1- 4 121 994
- DE-A1- 10 324 952
- DE-C1- 3 642 825
- GB-A- 2 359 862
- GB-A- 2 384 007
- JP-A- 2 107 730
- US-A- 5 019 185
- US-A- 5 089 057
- US-A- 5 516 484
- 'Metallurgical and Materials Transactions', Bd. 30A, Oktober 1999 Seite 2649
- ' DKI Informationsdruck "Kupfer-Nickel-Legierungen Eigenschaften Bearbeitung Anwendung"', Februar 1992
- '"Kupfer-Nickel", Deutsches Kupfer-Institut e.V.,Berlin,', 1959 Seiten 34 - 49
- Metall Internationale Zeitschrift für Technik und Wirtschaft, Heft 11, 45, Jahrgang 1991, S. 1134, 1135
- ' "Gleitlager", O. R. Lang, W. Steinhilper, Springer-Verlag 1978', 1978
- 'Kupfer und Kupferlegierungen in der Technik, Kurt Dies, Springer-Verlag 1967',

## Beschreibung

Die Erfindung betrifft einen bandförmigen Werkstoffverbund und dessen Verwendung sowie ein Verbundgleitelement, bestehend aus einem bandförmigen Werkstoffverbund .

Seit Jahrzehnten haben sich bereits Kupferlegierungen für Lageranwendungen bewährt. Sie erfüllen wegen ihres Gefügeaufbaus und aufgrund ihrer Eigenschaften die an sie gestellten Anforderungen besonders gut. Allerdings hat sich gezeigt, dass den herkömmlichen Bronzen sowie Sondermessingen unter starker thermischer Belastung Grenzen gesetzt sind.

Alternativ zu gebräuchlichen Buchsen aus massivem Lagermaterial sind auch Stahlverbundbuchsen bekannt. Beispielsweise werden zu deren Herstellung Bänder aus bleihaltigen Zinnbronzen durch Walzverfahren auf Stähle aufplattiert. Allerdings werden derartige Lagerwerkstoffe aus Zinnbronzen mit Gehalten von 4-8 Gew.-% Zinn nicht allen an die Lagerwerkstoffe gestellten hohen Anforderungen in hochbeanspruchten Umgebungen eines Motorraums gerecht.

Aus der Druckschrift DE 199 63 385 C1 ist ein Schichtverbundwerkstoff für Gleitlager bekannt, der eine höhere spezifische Belastbarkeit und geringeren Verschleiß aufweist. Der Schichtverbundwerkstoff weist eine Trägerschicht, eine Lagermetallschicht, eine erste Zwischenschicht aus Nickel, eine zweite Zwischenschicht aus Zinn und Nickel sowie eine aus Kupfer und Zinn bestehende Gleitschicht auf. Die Gleitschicht besitzt eine Zinnmatrix, in die Zinn-Kupfer-Partikel eingelagert sind, die aus 39 bis 55 Gew.-% Kupfer und Rest Zinn bestehen.

Bei hohen Temperaturen, wie sie bei Gleitlagern in Verbrennungsmotoren auftreten, tritt eine Abwanderung des Zinns in die darunter liegende zweite Zwischenschicht auf, wodurch eine Aufkonzentration der Zinn-Kupfer-Partikel stattfindet.

Des Weiteren sind aus der Druckschrift DE 33 04 740 C2 Mehrschichten-Gleitlager bekannt, die aus einem festen metallischen Stützkörper, einer weicheren metallischen Tragschicht, beispielsweise aus einer Aluminium-Lagerlegierung, und einer galvanisch aufgetragenen Gleitschicht aus einer zinnhaltigen Lagerlegierung auf Bleibasis bestehen. Zwischen der Tragschicht und der Gleitschicht ist eine Einlage-Doppelschicht, die eine Kupferlegierungsschicht beinhaltet, angeordnet.

Auch ist aus der Druckschrift EP 0 921 211 ein Schichtverbundwerkstoff für Gleitlager mit einer Trägerschicht, einer Lagermetallschicht aus einer Kupferlegierung mit einem Kupferanteil von 60 bis 95 Gew.-% oder einer Aluminiumlegierung mit einem Aluminiumanteil von 60 bis 96 Gew.-%, einer Diffusionssperrschicht und einer galvanisch aufgebrachten Gleitschicht aus einer bleifreien Kupfer-ZinnLegierung bekannt.

Aus der Druckschrift GB 2 359 862 A ist eine Kupferlegierung für Gleitlageranwendungen bekannt. Die Gleitlagerlegierung ist bleifrei und besteht aus nebeneinander koexistierenden weichen und harten Phasen. Beide Phasen sind miteinander in Beziehung gesetzt, wobei die Vickers Härte der Hartphase die der Weichphase um zumindest 20 % übersteigt. Infolge der Phasenbeschaffenheit sollen die Eigenschaften, die in Verbindung mit Materialermüdung und Fressneigung stehen, positiv beeinflusst werden. Als Hartphase wird eine Cu-Sn-Ni-Phase angegeben, die in Pulverform mit Kupfer als Weichphase vermengt und bei Temperaturen um 800 bis 920 °C gesintert wird. Als weitere Beimengungen werden unter anderem Mangan und Silicium in einem weit gefassten Mengenbereich von 0,2 bis 40 % angegeben.

Des Weiteren ist aus der Druckschrift JP 02 107730 A ein Synchronring aus einer Cu-Sn-Mn-Si-P-Sinterlegierung mit einer Porosität von bis zu 10 % bekannt. Die Legierung kann auch bis zu 4 % Nickel enthalten, wird allerdings gemäß Tabellenangaben nicht oder lediglich mit ganz geringem Anteil beigegeben. Die Elemente Mangan bzw. Silicium hingegen werden nach Tabellenwerten zu einem wesentlich höheren Gehalt um ungefähr 5 % bzw. 2,5 % der Legierung beigemengt. Besondere intermetallische Phasen zur Härtesteigerung sind nicht weiter beschrieben.

Der Erfindung liegt die Aufgabe zugrunde, einen bandförmigen Werkstoffverbund und ein Verbundgleitlager dergestalt weiterzubilden, dass sich sowohl eine hohe Verschleißbeständigkeit als auch eine hohe Warmfestigkeit ausbilden.

Die Erfindung wird bezüglich eines bandförmigen Werkstoffverbunds durch die Merkmale des Anspruchs 1 wiedergegeben. Eine Verwendung des bandförmigen Werkstoffverbunds ist in Anspruch 5 und ein Verbundgleitelement in Anspruch 6 wiedergegeben. Die weiteren rückbezogenen Ansprüche betreffen vorteilhafte Aus- und Weiterbildungen der Erfindung.

Die Erfindung schließt einen bandförmigen Werkstoffverbund ein wie es in Anspruch 1 definiert ist.

Die Erfindung geht dabei von der Überlegung aus, dass ein leistungsfähiger Werkstoffverbund zur Verfügung gestellt wird, bestehend aus Stahl und einer mit dem Stahl unlösbar verbundenen Cu-Ni-Sn-Legierung. Der Werkstoffverbund hat das Ziel, gleichzeitig eine sehr gute Verschleißbeständigkeit und auf Grund der Verwendung als Gleitelement in thermisch belasteter Umgebung eine ausgezeichnete Warmfestigkeit zu bieten.

Die erfindungsgemäßen Cu-Ni-Sn-Knetlegierungen sind spinodal entmischende Systeme, die als Lagerwerkstoffe im Motorenbau bereits als Vollmaterial prinzipiell bekannt sind. Diese Werkstoffe besitzen gute Reib- und Verschleißeigenschaften sowie eine gute Korrosionsbeständigkeit. Auch die thermische Stabilität ist ausgezeichnet.

Mit Ni-Gehalten von 1-15% und Sn-Gehalten von 2-12% können bei diesen Materialien Kaltumformgrade bis zu 60% erzielt werden. In Kombination mit Weichglühen gelingt es für Werkstoffverbunde geeignet dünne Bänder zu produzieren. Wahlweise können diese Bänder im Temperaturbereich zwischen 300 und 500 °C ausgelagert werden. Hierdurch verfestigt sich das Material infolge der ablaufenden spinodalen Entmischung. Zudem können sich kontinuierliche bzw. diskontinuierlichen Ausscheidung ausbilden.

Diese Form der Ausscheidungshärtung ist den binären Kupfer-Basislegierungen deutlich überlegen. Zur Optimierung der Haftfestigkeit zwischen der Cu-Ni-Sn-Legierung und dem Stahlband werden die Oberflächen beider Werkstoffe vorbehandelt. Thermische Stabilität und Festigkeit bei gleichzeitig notwendiger Duktilität wird durch die erfindungsgemäßen ausscheidungsverfestigten Werkstoffe für Lagerelemente unter erhöhten Ansprüchen realisiert.

Gegenüber massiven Buchsen bestehen die mit der Erfindung erzielten Vorteile insbesondere darin, dass bei dem Werkstoffverbund die Anforderungen in Bezug auf die mechanischen Eigenschaften und die tribologischen Eigenschaften durch die Kombination aus Stahl und einer Kupfer-Mehrstofflegierungsschicht getrennt voneinander optimierbar sind. Für beide Verbundpartner können mittels Walzen, Auslagern und Homogenisierungsglühen die Materialeigenschaften optimal auf den jeweiligen Bedarf angepasst werden. So kann beispielsweise auch eine weichere oder auch härtere Kupfer-Mehrstofflegierungsschicht durch mechanische und thermische Behandlung mit der Stahlstützschicht kombiniert werden. Die Kombination beider Materialien in einem Werkstoffverbund gibt Materialeigenschaften, die sich in ausgezeichneter Weise für Gleitelementanwendungen eignet.

Eine kostengünstige Konstruktion ergibt sich in diesem Zusammenhang daraus, dass der volumenmäßige Anteil sowie der gewichtsmäßige Anteil des Stahlträgermaterials größer sind, als der Anteil des Funktionswerkstoffes aus der Kupfer-Mehrstofflegierungen.

In besonders bevorzugter Ausgestaltung der Erfindung kann die Kupfer-Mehrstofflegierung zusammengesetzt sein aus [in Gew.-%]:

| | |
|---|---|
| Ni | 1,0 bis 15,0 %, |
| Sn | 2,0 bis 12,0 %, |
| Mn | 0,1 bis 2,5 %, |
| Si | 0,1 bis 1,5 %, |

Rest Cu sowie unvermeidbare Verunreinigungen,
wahlweise einzeln oder in Kombination bis zu 1,5 % Ti, Co, Cr, Al, Fe, Zn, Sb, wahlweise einzeln oder in Kombination bis zu 0,5 % B, Zr, P, S.

Hierdurch wird das Ziel verfolgt, eine weitere Verbesserung der Verschleißbeständigkeit von Cu-Ni-Sn-Legierungen durch die Bildung von harten intermetallischen Phasen einzustellen. Bei diesen weiteren Hartstoffphasen handelt es sich um Mangan-Nickel-Silizide. Cu-Ni-Sn-Legierungen zeigen bereits als solche sehr gute Eigenschaften in Bezug auf die Gleiteigenschaften, Korrosionsbeständigkeit und Relaxationsbeständigkeit bei Raumtemperatur. Mit den gebildeten harten Phasen wird jedoch die Adhäsionsneigung im Bereich der Mischreibung verringert und die Warmfestigkeit sowie Duktilität bei höheren Temperaturen weiter gesteigert.

Durch Kombination der zur Verschleißbeständigkeit beitragenden Gefügebestandteile in Verbindung mit einer spinodal entmischenden Legierung des Systems Cu-Ni-Sn gelingt es überraschenderweise einerseits das Einlaufverhalten zu Beginn einer Belastung durch Verschleiß zu reduzieren, andererseits erweist sich ein solcher Werkstoff aus Cu-Ni-Sn-Mn-Si eben als warmfest sowie auch ausreichend duktil.

Vorteilhafterweise kann die Stützschicht aus Tiefziehstahl, Vergütungsstahl oder Einsatzstahl bestehen. Auch in Betracht kommen weitere hochfeste Stähle.

Vorteilhafterweise kann die Schicht, bestehend aus der Kupfer-Mehrstofflegierung, eine Dicke von 0,1 bis 3 mm aufweisen. Bänder der Kupfer-Mehrstofflegierung können dabei durch geeignete thermomechanische Behandlung bis auf diese Dicke gewalzt werden.

In bevorzugter Ausgestaltung der Erfindung kann zwischen der Oberfläche der Stützschicht aus Stahl und der Schicht, bestehend aus der Kupfer-Mehrstofflegierung, eine Zwischenschicht angeordnet sein.

Diese Zwischenschicht soll insbesondere Diffusionsvorgänge an der Grenzfläche der Kupfer-Mehrstofflegierung zum Stahl hin verhindern und gegebenenfalls die Haftfähigkeit beider Partner steigern.

Verfahrensseitig kann die Schicht, bestehend aus der Kupfer-Mehrstofflegierung, auf die Stützschicht aus Stahl aufgewalzt oder aufgegossen oder aufgesintert werden. Dazu werden beim Aufwalzen die Oberfläche des Bandmaterials der Stützschicht und das der Kupfer-Mehrstofflegierung vorbehandelt und gereinigt. Im einfachsten Fall geschieht dies durch eine mechanische Vorbehandlung mit Bürsten.

Vorteilhafterweise können sich die walzplattierten Bänder besonders zur Herstellung von Verbundgleitelementen eignen, beispielsweise in Form von gerollten Buchsen und Anlaufscheiben. Diese Legierung kann auch im Bereich der Elektrotechnik für Steckverbinder Verwendung finden.

In bevorzugter Ausgestaltung der Erfindung kann ein Verbundgleitelement aus dem erfindungsgemäßen bandförmigen Werkstoffverbund bestehen, wobei dieses vor und/oder nach der Formgebung zumindest eine Temperaturbehandlung bei 300 bis 500 °C durchlaufen hat. Dabei verfestigt sich das Material durch die ablaufende spinodale Entmischung.

Vorteilhafterweise hat ein Verbundgleitelement aus dem erfindungsgemäßen bandförmigen Werkstoffverbund vor und/oder nach der Formgebung zumindest eine Temperaturbehandlung bei 600 bis 800 °C durchlaufen. Durch die Temperaturbehandlung in diesem Bereich findet eine Homogenisierung statt, durch die das Material weicher wird.

Alternativ hierzu kann ein Verbundgleitelement eine Kombination aus zumindest einem Lösungsglühen bei 600 bis 800 °C und zumindest einem Auslagern bei 300 bis 500 °C durchlaufen. Durch ein Homogenisierungsglühen und der Aushärtung des Materials beim Auslagern bzw. beim Walzen lassen sich die Werkstoffeigenschaften der Kupfer-Mehrstofflegierung optimal auf den Verbundpartner Stahl anpassen.

In weiterer bevorzugter Ausgestaltung können in der Schicht, bestehend aus der Kupfer-Mehrstofflegierung, Schmiertaschen angeordnet sein.

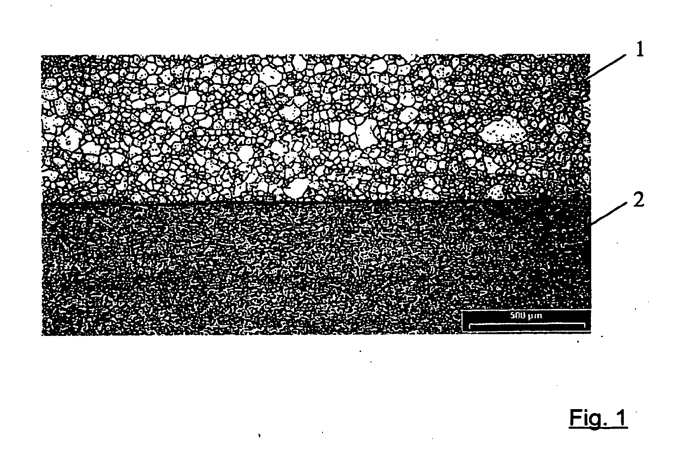

Beispiele werden anhand der folgenden Beispiele und der in Fig. 1 gezeigten lichtmikroskopischen Aufnahme eines Werkstoffverbundes aus einer CuNiSn-Legierung und einem Stahlband näher erläutert.

### Vergleichs-Beispiel 1:

Für die Untersuchungen wurden CuNi6Sn6 walzhart und weichgeglüht als Auflagewerkstoff und Stahl in verschiedenen Zuständen als Grundwerkstoff verwendet. Die Proben wurden mit Bürsten behandelt und anschließend gereinigt.

Im Anschluß erfolgte unmittelbar das Walzen mit unterschiedlichen Stichabnahmen. Die Ausgangsdicke der Streifen aus der Kupfer-Mehrstofflegierung wurde bei ca. 3 mm belassen. Die unterschiedlichen Banddicken des Grundwerkstoffes betrugen 1,5, 3 und 5 mm. Die Breite der Kupfer-Mehrstofflegierung war um ca. 0,1 - 0,3 mm geringer als die des Grundwerkstoffes. Es wurden Walzkräfte, Momente und Austrittstemperaturen gemessen. Es wurde für jeden Werkstoffzustand mit den genannten Dicken des Grundwerkstoffes gearbeitet und jeweils fünf Variationen pro Kombination durchgeführt. Die Walzversuche ergaben, dass sich die Plattierung von CuNi6Sn6 auf Stahl ohne weiteres mit guter Haftung der Materialien realisieren lässt.

Fig. 1 zeigt eine lichtmikroskopische Aufnahme eines Querschnittes eines Werkstoffverbundes aus einer CuNiSn-Legierung 1 und einem Stahlband 2.

Dabei kann der Verbundlagerwerkstoff durch Walzplattieren im walzharten, im weichgeglühten sowie im ausgelagerten Zustand verwendet werden. Die Homogenisierungstemperaturen liegen zwischen 500 und 800 °C, eine Auslagerung erfolgt bei Temperaturen zwischen 300 und 500 °C.

### Vergleichs-Beispiel 2:

Im Folgenden wird ein Verfahren zur Herstellung eines Werkstoffverbunds mit der Kupfer-Mehrstofflegierung für Gleitelemente, wie Anlaufscheiben und Lagerbuchsen, beschrieben. Bei diesem Verfahren wurde ein bleifreier Lagerwerkstoff aus dem System Cu-Ni-Sn durch Aufschmelzen und Giessen auf Tiefziehstahl aufgebracht. Der bleifreie Lagerwerkstoff wurde bei einer Temperatur von 1000 bis 1200 °C aufgegossen, wobei sich das Gefüge der Schicht aus α-Phase mit kontinuierlichen und diskontinuierlichen Ausscheidungen ausbildet. Der Werkstoffverbund aus Stahl und der Cu-Ni-Sn-Legierung wurde bei Temperaturen zwischen 600 bis 800 °C geglüht und anschließend die Oberfläche der Schicht abgefräst. Diese Schichtlagerwerkstoffe können sowohl im Gusszustand als auch im ausgelagerten Zustand für Gleitlagerelemente verwendet werden. Die Auslagerung wurde bei Temperaturen zwischen 300 bis 500 °C durchgeführt.

Durch thermomechanische Behandlungen wie Walzen und Glühen wurde das Gussgefüge der Lagerschicht geknetet. Die Bänder können bei umformgraden zwischen 10 bis 60 % kaltgewalzt und anschließend bei Temperaturen zwischen 500 bis 800 °C geglüht werden. Es hat sich gezeigt, dass der Verbundlagerwerkstoff in allen verschiedenen Zuständen bzw. im Gusszustand, im gekneteten Zustand und im ausgelagerten Zustand für Gleitelemente verwendet werden kann.

### Ausführungs-Beispiel : der Erfindung

In weiteren Versuchsreihen wurden Blöcke mit verschiedenen Mn-Si-Verhältnissen gegossen und anschließend kalt weiter bearbeitet. Die untersuchten Legierungsvarianten sind in Tabelle 1 zusammengefasst. Die Gussblöcke wurden im Temperaturbereich zwischen 700 bis 800°C homogenisiert und dann gefräst. Durch mehrere Kaltumformstufen und Zwischenglühung wurden dann Bänder mit Dicken zwischen 2,5 und 2,85 mm hergestellt. Die Bänder wurden kaltgewalzt und anschließend im Temperaturbereich zwischen 700 bis 800°C geglüht, um ein ausreichendes Kaltumformvermögen zu erzielen.

**Tabelle 1:**

| Cu-Ni- Sn+Mn+Si | Cu [Gew.-%] | Ni [Gew.-%] | Sn [Gew.-%] | Mn [Gew.-%] | Si [Gew.-%] |
|---|---|---|---|---|---|
| Varianten 1 | Rest | 5,6 - 6,0 | 5,2 - 5,6 | 1,7 - 2,0 | 0,2 - 0,3 |
| Varianten 2 | Rest | 5,6 - 6,0 | 5,2 - 5,6 | 1,3 - 1,6 | 0,2 - 0,3 |
| Varianten 3 | Rest | 5,6 - 6,0 | 5,2 - 5,6 | 1,3 - 1,6 | 0,5 - 0,7 |
| Varianten 4 | Rest | 5,6 - 6,0 | 5,2 - 5,6 | 0,8 - 1,0 | 0,1 - 0,3 |
| Varianten 5 | Rest | 5,6 - 6,0 | 5,2 - 5,6 | 0,8 - 1,0 | 0,3 - 0,5 |
| Varianten 6 | Rest | 5,6 - 6,0 | 5,2 - 5,6 | 0,4 - 0,6 | 0,4 - 0,6 |
| Varianten 7 | Rest | 5,6 - 6,0 | 5,2 - 5,6 | 0,9 - 1,1 | 0,9 - 1,1 |
| Varianten 8 | Rest | 5,6 - 6,0 | 5,2 - 5,6 | 1,8 - 2,1 | 0,5 - 0,6 |
| Varianten 9 | Rest | 5,6 - 6,0 | 5,2 - 5,6 | 1,8 - 2,1 | 0,9 - 1,1 |

Erwartungsgemäß hat sich bestätigt, dass das Kaltumformvermögen der mit Siliziden modifizierten Cu-Ni-Sn-Legierung etwas geringer ist als bei einer Cu-Ni-Sn-Legierung ohne weitere Silizidphasen.

Derartige Bänder werden in einem weiteren Verfahrensschritt durch Walzplattierverfahren zu einem festen Werkstoffverbund vereinigt. Bei den Tests mit tribologischen Versuchen konnte für die mit Siliziden modifizierten Cu-Ni-Sn-Legierungen ein deutlich geringerer Reibungskoeffizient im Vergleich zur nicht modifizierten Variante nachgewiesen werden. Diese neue modifizierte Legierung eignet sich damit insbesondere als Vormaterial für den Einsatz als Gleitelement (Buchsen, Anlaufscheiben, etc) im jeweiligen Automotivebereich für Motoren, Getriebe und Hydraulik.

Es hat sich über die angegebenen Tabellenwerte hinaus allerdings gezeigt, dass modifizierte Cu-Ni-Sn-Varianten mit einem Si-Gehalt bis 1,5 Gew.-% und einem Mn-Gehalt bis 2,5 Gew.-% mit einer Verbesserung der Werkstoffeigenschaften gefertigt werden können. Weitere Laborversuche wurden dazu ebenfalls bereits durchgeführt und die Grenzwerte bestätigt.

Insbesondere wurde sichergestellt, dass bei einem Si-Gehalt bis 0,7 Gew.-% und einem Mn-Gehalt von bis 1,6 Gew.-% tatsächlich auch aus fertigungstechnischer Sicht problemlos gefertigt werden kann. Bei höheren Gehalten von Silicium und Mangan sollten seitens der Gießparameter entsprechende Anpassungen im Rahmen üblicher Vorkehrungen vorgenommen werden.

Bei Silicium- bzw. Mangangehalten über den angegebenen Maximalwerten von 3 Gew.-% bzw. 5 Gew.-% ist allerdings mit Schwierigkeiten, insbesondere wegen Randrissen im Bandmaterial, bei der Weiterverarbeitung zu rechnen.

Die CuNiSn-Legierung enthält fein verteilte Mangan-Nickel-Silizide, die in die Legierungsmatrix eingebettet sind. Diese Silizide bilden sich als Erstausscheidung in der Schmelze bereits in einem Temperaturbereich um 1100 °C. Bei günstiger Wahl der Schmelzezusammensetzung werden das zur Verfügung stehende Silicium und Mangan mit einem im Überschuss vorhandenen Nickelanteil zum Silizid ausgeschieden. Der dabei im Silizid verbrauchte Nickelanteil kann für die spätere Ausbildung der Matrix durch einen höheren Nickelanteil in der Schmelze entsprechend berücksichtigt werden.

Die Zusammensetzung der Silizide muss dabei nicht unbedingt einer vorgegebenen Stöchiometrie entsprechen. Je nach Prozessführung, insbesondere durch die Abkühlrate bestimmt, scheiden sich ternäre intermetallische Phasen in Form der Silizide des Typs (Mn,Ni)ₓSi aus, die im Bereich zwischen den binären Randphasen Mn₅Si₃ und Ni₂Si liegen.

## Patentansprüche

1. Bandförmiger Werkstoffverbund, bei welchem eine Schicht, bestehend aus einer Kupfer-Mehrstofflegierung in Form einer Kupfer-Knetlegierung oder Kupfer-Gusslegierung, mit einer Stützschicht aus Stahl unlösbar verbunden ist, wobei die Kupfer-Mehrstofflegierung zusammengesetzt ist aus [in Gew.-%]:
| | |
|---|---|
| Ni | 1,0 bis 15,0 %, |
| Sn | 2,0 bis 12,0 %, |
| Mn | 0,1 bis 2,5 %, |
| Si | 0,1 bis 1,5 %, |
wahlweise einzeln oder in Kombination bis zu 1,5 % Ti, Co, Cr, Al, Fe, Zn, Sb,
wahlweise einzeln oder in Kombination bis zu 0,5 % B, Zr, P, S,
wahlweise bis zu 25 % Pb,
Rest Cu sowie unvermeidbare Verunreinigungen,
wobei in der Kupfer-Mehrstofflegierung Mangan-Nickel-Silizide als harte intermetallische Phasen ausgebildet sind.

2. Bandförmiger Werkstoffverbund nach Anspruch 1, **dadurch gekennzeichnet, dass** die Stützschicht aus Tiefziehstahl, Vergütungsstahl oder Einsatzstahl besteht.

3. Bandförmiger Werkstoffverbund nach Anspruch 1 oder 2, **dadurch gekennzeichnet, dass** die Schicht, bestehend aus der Kupfer-Mehrstofflegierung, eine Dicke von 0,1 bis 3 mm aufweist.

4. Bandförmiger Werkstoffverbund nach einem der Ansprüche 1 bis 3, **dadurch gekennzeichnet, dass** zwischen der Oberfläche der Stützschicht aus Stahl und der Schicht, bestehend aus der Kupfer-Mehrstofflegierung, eine Zwischenschicht angeordnet ist.

5. Verwendung des bandförmigen Werkstoffverbunds nach einem der vorstehenden Ansprüche 1 bis 4 für Verbundgleitelemente oder Steckverbinder.

6. Verbundgleitelement, bestehend aus einem bandförmigen Werkstoffverbund, nach einem der Ansprüche 1 bis 4, **dadurch gekennzeichnet, dass** dieses vor und/oder nach der Formgebung zumindest eine Temperaturbehandlung bei 300 bis 500 °C durchlaufen hat.

7. Verbundgleitelement, bestehend aus einem bandförmigen Werkstoffverbund nach einem der Ansprüche 1 bis 4, **dadurch gekennzeichnet, dass** dieses vor und/oder nach der Formgebung zumindest eine Temperaturbehandlung bei 600 bis 800 °C durchlaufen hat.

8. Verbundgleitelement, bestehend aus einem bandförmigen Werkstoff-verbund nach einem der Ansprüche 1 bis 4, **dadurch gekennzeichnet, dass** dieses eine Kombination aus zumindest einem Lösungsglühen bei 600 bis 800 °C und zumindest einem Auslagern bei 300 bis 500 °C durchlaufen hat.

9. Verbundgleitelement nach einem der Ansprüche 6 bis 8, **dadurch gekennzeichnet, dass** in der Schicht, bestehend aus der Kupfer-Mehrstofflegierung, Schmiertaschen angeordnet sind.

## Claims

1. Strip-like composite material in which a layer, consisting of copper multicomponent alloy in the form of a wrought copper alloy or a cast copper alloy, is non-releasably connected to a support layer of steel, the copper composite alloy being composed of (in percentage by weight):
Ni from 1.0 to 15.0%,
Sn from 2.0 to 12.0%,
Mn from 0.1 to 2.5%,
Si from 0.1 to 1.5%,
optionally individually or in combination up to 1.5% of Ti, Co, Cr, Al, Fe, Zn, Sb,
optionally individually or in combination up to 0.5% B, Zr, P, S,
optionally up to 25% Pb,
remainder Cu and inevitable impurities,
manganese/nickel silcides being formed in the copper composite alloy as hard intermetallic phases.

2. Strip-like composite material according to claim 1, **characterised in that** the support layer comprises deep drawing steel, tempering steel or case hardening steel.

3. Strip-like composite material according to claim 1 or 2, **characterised in that** the layer comprising the copper composite alloy has a thickness of from 0.1 to 3 mm.

4. Strip-like composite material according to any one of claims 1 to 3, **characterised in that**, between the surface of the support layer of steel and the layer comprising the copper composite alloy, an intermediate layer is arranged.

5. Use of the strip-like composite material according to any one of the preceding claims 1 to 4 for composite sliding elements or plug-type connectors.

6. Composite sliding element comprising a strip-like composite material according to any one of claims 1 to 4, **characterised in that**, before and/or after the shaping operation, it has been subjected to at least one temperature processing operation at from 300 to 500°C.

7. Composite sliding element comprising a strip-like composite material according to any one of claims 1 to 4, **characterised in that**, before and/or after the shaping operation, it has been subjected to at least one temperature treatment at from 600 to 800°C.

8. Composite sliding element comprising a strip-like composite material according to any one of claims 1 to 4, **characterised in that** it has been subjected to a combination of at least one solution treatment at from 600 to 800°C and at least one age-hardening operation at from 300 to 500°C.

9. Composite sliding element according to any one of claims 6 to 8, **characterised in that**, in the layer comprising the copper composite alloy, lubrication pockets are arranged.

## Revendications

1. Matériau composite en forme de bande, dans lequel une couche constituée d'un alliage de cuivre et de constituants multiples sous forme d'un alliage de cuivre corroyé ou d'un alliage de cuivre coulé est liée de manière inamovible à
une couche formant support ou substrat en acier,
l'alliage de cuivre et de constituants multiples étant composé (en % en poids) de:
Ni 1,0 à 15,0%,
Sn 2,0 à 12,0%,
Mn 0,1 à 2,5%,
Si 0,1 à 1,5%,
au choix, individuellement ou en combinaison jusqu' à 1,5% Ti, Co, Cr, Al, Fe, Zn, Sb,
au choix, individuellement ou en combinaison jusqu' à 0,5% B, Zr, P, S,
au choix jusqu' à 25% Pb,
reste Cu ainsi que les impuretés inévitables,
des siliciures de manganèse et de nickel étant formées en tant que phases intermétalliques dures dans l'alliage de cuivre et de constituants multiples.

2. Matériau composite en forme de bande selon la revendication 1, **caractérisé en ce que** la couche formant substrat est réalisée en un acier d'emboutissage, un acier de traitement ou un acier de cémentation.

3. Matériau composite en forme de bande selon la revendication 1 ou 2, **caractérisé en ce que** la couche constituée par l'alliage de cuivre et de constituants multiples, présente une épaisseur de 0,1 à 3 mm.

4. Matériau composite en forme de bande selon l'une des revendications 1 à 3, **caractérisé en ce qu'**entre la surface de la couche formant substrat en acier et la couche constituée par l'alliage de cuivre et de constituants multiples, est agencée une couche intermédiaire.

5. Utilisation du matériau composite en forme de bande selon l'une des revendications précédentes 1 à 4 pour des éléments de glissement composites ou des connecteurs enfichables.

6. Elément de glissement composite, constitué d'un matériau composite en forme de bande selon l'une des revendications 1 à 4, **caractérisé en ce que** celui-ci a été soumis, avant et/ou après la mise en forme, à au moins un traitement thermique à une température de 300 à 500°C.

7. Elément de glissement composite, constitué d'un matériau composite en forme de bande selon l'une des revendications 1 à 4, **caractérisé en ce que** celui-ci a été soumis, avant et/ou après la mise en forme, à au moins un traitement thermique à une température de 600 à 800°C.

8. Elément de glissement composite, constitué d'un matériau composite en forme de bande selon l'une des revendications 1 à 4, **caractérisé en ce que** celui-ci a été soumis à une combinaison d'au moins un recuit d'homogénéisation à une température de 600 à 800°, et d'au moins une précipitation à une température de 300 à 500°C.

9. Elément de glissement composite selon l'une des revendications 6 à 8, **caractérisé en ce que** dans la couche constituée par l'alliage de cuivre et de constituants multiples, sont agencées des alvéoles de lubrification.
